# EUROPÄISCHE PATENTSCHRIFT

(11) **EP 4 477 044 B1**
(45) Veröffentlichungstag und Bekanntmachung des Hinweises auf die Patenterteilung: **02.12.2026**
(21) Anmeldenummer: 24180396.4
(22) Anmeldetag: 06.06.2024
(51) Int. Cl.: A01B 63/22, A01D 78/10

(54) **HEUWERBUNGSMASCHINE**
HAYMAKING MACHINE
MACHINE DE FENAISON

(30) Priorität: 13.06.2023 DE 102023115383
(43) Veröffentlichungstag der Anmeldung: 18.12.2024
(73) Patentinhaber: CLAAS Saulgau GmbH, 88348 Bad Saulgau (DE)
(72) Erfinder: Kesenheimer, Linus, 88374 Hosskirch (DE); Beyrle, Michael, 88521 Ertingen (DE)

(56) Entgegenhaltungen:
- EP-A1- 2 436 260
- DE-A1- 3 926 382
- DE-U1- 9 109 324
- FR-A1- 2 699 044

## Beschreibung

Die Erfindung betrifft eine Heuwerbungsmaschine nach dem Oberbegriff des Anspruchs 1.

Aus der Praxis sind Heuwerbungsmaschinen hinlänglich bekannt. So sind als Schwader sowie als Wender ausgebildete Heuwerbungsmaschinen bekannt.

Aus DE 91 09 324 U1 ist eine landwirtschaftliche Maschine bekannt, deren Fahrzeugrahmen eine Deichsel zum Anhängen an eine Zugmaschine, zum Straßentransport hochklappbare seitliche Rahmenteile sowie ein über Stellelemente abschwenkbares Transportfahrgestell aufweist, wobei beim Ausfahren des Stellelementes ein doppelarmiger Hebel, an dessen beiden Enden Koppelstangen angelenkt sind, um einen Drehpunkt am Fahrzeugrahmen schwenkt, wobei die Koppelstange zum Transportfahrgestell dieses in eine Stellung nach unten schwenkt, während die Koppelstange den Maschinenrahmen um einen Drehpunkt am Fahrzeugrahmen nach vorne schwenkt, wobei die Hebelarme und die Anlenkung der Koppelstangen am Transportfahrgestell bzw. dem Maschinenrahmen so getroffen ist, dass die Schwenkbewegung der Maschine zeitlich versetzt erst nach dem Ausschwenken des Transportfahrgestells erfolgt.

FR 2 699 044 A1 offenbart eine Heuwerbungsmaschine mit einem Tragrahmen, wobei an dem Tragrahmen mehrere Kreiselkörper angreifen. Am Tragrahmen greifen über einen jeweiligen Transportradhebel Transporträder an. Die Transporträder stützen sich in einer Transportstellung der Heuwerbungsmaschine auf einem Untergrund ab. In einer Arbeitsposition der Heuwerbungsmaschine sind die Transporträder vom Untergrund abgehoben. Vielmehr ist vorgesehen, dass sich in der Arbeitsstellung der Heuwerbungsmaschine dieselbe über Tast- und Stützräder der Kreiselkörper auf dem Untergrund abstützt. In der Transportstellung der Heuwerbungsmaschine sind diese Tast- und Stützräder vom Untergrund abgehoben. Zur Verlagerung der Heuwerbungsmaschine zwischen der Transportstellung und der Arbeitsstellung und demnach zur Verlagerung der Transporträder zwischen der Arbeitsstellung und der Transportstellung weist die Heuwerbungsmaschine eine Verstelleinrichtung auf. Die Verstelleinrichtung verfügt über einen Betätigungszylinder und einen Betätigungskolben, wobei der Betätigungskolben eine Zahnstange translatorisch verlagert, die mit einem Zahnrad zusammenwirkt. Über die Drehung des Zahnrads sind die Transportradhebel und über die Transportradhebel die Transporträder relativ zum Tragrahmen verlagerbar.

Hiervon ausgehend liegt der Erfindung die Aufgabe zugrunde, eine neuartige Heuwerbungsmaschine zu schaffen.

Diese Aufgabe wird durch eine Heuwerbungsmaschine nach Anspruch 1 gelöst.

Erfindungsgemäß weist die Verstelleinrichtung eine Hubschwinge auf, die über ein erstes Drehgelenk relativ zu Transportradhebeln, um ein zweites Drehgelenk relativ zum Tragrahmen und um ein drittes Drehgelenk relativ zu einem Betätigungskolben des Betätigungszylinders schwenkbar ist.

Ferner weist die Verstelleinrichtung erfindungsgemäß mindestens einen Zwischenkörper auf, der um ein viertes Drehgelenk relativ zum Tragrahmen und um ein fünftes Drehgelenk relativ zu den Transportradhebeln schwenkbar ist.

Durch das Zusammenspiel der Hubschwinge und des Zwischenkörpers ist es möglich, die Transportradhebel und damit Transporträder bei der Überführung der Heuwerbungsmaschine zwischen der Transportstellung und der Arbeitsstellung zuverlässig mit reduzierter Gefahr eines ungewollten Verklemmens relativ zum Tragrahmen zu verlagern.

Ein weiterer Vorteil der Erfindung gegenüber dem Stand der Technik besteht darin, dass sich entlang des Verlagerungswegs bzw. Klappwinkels der Transportradhebel und damit Transporträder relativ zum Tragrahmen unterschiedliche Klappgeschwindigkeiten realisieren lassen. So kann vor den jeweiligen Endpositionen der Transporträder in der Transportstellung sowie Arbeitsstellung ein relativ langsames Klappen der Transporträder und damit Transportradhebel und zwischen diesen Endstellungen ein relativ schnelles Klappen bzw. Verlagern gewährleistet werden. So können die jeweiligen Endpositionen sanft angefahren werden, zwischen den Endpositionen ist ein schnelles Verlagern bzw. Klappen der Transporträder möglich, wodurch letztendlich bei minimaler mechanischer Belastung eine geringe Klappzeit bzw. Überführzeit für die Heuwerbungsmaschine zwischen der Transportstellung und der Arbeitsstellung realisiert werden kann.

Das erste Drehgelenk ist zwischen der Hubschwinge und einem vom jeweiligen Transportrad abgewandten Ende des jeweiligen Transportradhebels ausgebildet. Diese Ausbildung des ersten Drehgelenks ermöglicht eine geringe Klappzeit.

Das zweite Drehgelenk ist zwischen der Hubschwinge und dem Tragrahmen ausgebildet, insbesondere zwischen der Hubschwinge und einem Längsträger des Tragrahmens. Diese Ausgestaltung des zweiten Drehgelenks ermöglicht eine geringe Klappzeit für die Heuwerbungsmaschine zwischen der Transportstellung und der Arbeitsstellung.

Das dritte Drehgelenk ist zwischen einer die Hubschwingbleche starr verbindenden Querstrebe und der Kolbenstange ausgebildet, insbesondere zwischen der Kolbenstange und einer an der die Hubschwingbleche verbindenden Querstrebe starr angreifenden Lasche der Querstrebe. Diese Ausgestaltung des dritten Drehgelenks ermöglicht eine geringe Klappzeit für die Heuwerbungsmaschine zwischen der Transportstellung und der Arbeitsstellung.

Das vierte Drehgelenk ist zwischen dem Zwischenkörper und dem Tragrahmen ausgebildet, insbesondere zwischen dem Zwischenkörper und einem Querträger des Tragrahmens. Diese Ausgestaltung des vierten Drehgelenks ermöglicht eine geringe Klappzeit zwischen der Transportstellung und der Arbeitsstellung.

Das fünfte Drehgelenk ist zwischen dem Zwischenkörper und einer sich zwischen den Transportradhebeln erstreckenden Fahrwerksquerstrebe ausgebildet, insbesondere zwischen dem Zwischenkörper und einer an der die Transportradhebel verbindenden Fahrwerksquerstrebe starr angreifenden Lasche der Fahrwerksquerstrebe. Diese Ausgestaltung des fünften Drehgelenks ermöglicht eine geringe Klappzeit und damit eine kürzere Überführungszeit für die Heuwerbungsmaschine zwischen der Transportstellung und der Arbeitsstellung.

Vorzugsweise ist der Betätigungszylinder um ein sechstes Drehgelenk relativ zum Tragrahmen schwenkbar. Auch dies ist für eine vorteilhafte Überführung der Heuwerbungsmaschine zwischen der Transportstellung und der Arbeitsstellung bei einer geringen Klappzeit für die Heuwerbungsmaschine zwischen der Transportstellung und der Arbeitsstellung von Vorteil.

Vorzugsweise ist die Heuwerbungsmaschine als Wender ausgebildet. Die Erfindung findet vorzugsweise bei einem Wender Einsatz.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Seitenansicht einer erfindungsgemäßen Heuwerbungsmaschine mit den Transporträdern in Transportstellung,
- Fig. 2: eine Seitenansicht einer erfindungsgemäßen Heuwerbungsmaschine mit den Transporträdern in Arbeitsstellung,

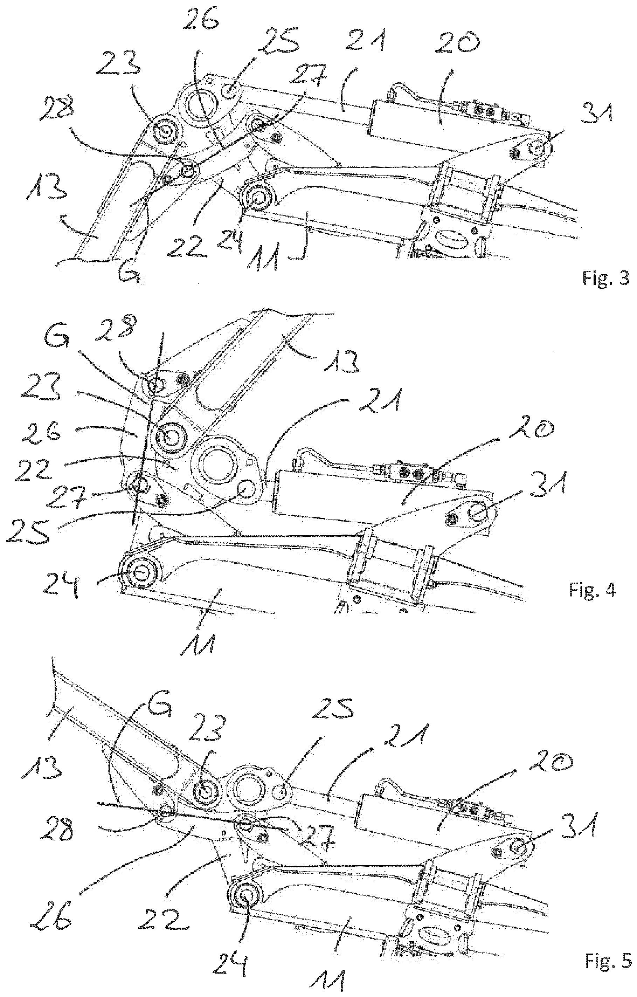

- Fig. 3: ein Detail der Fig. 1,
- Fig. 4: ein Detail der Fig. 2,
- Fig. 5: ein Detail einer erfindungsgemäßen Heuwerbungsmaschine in einer Zwischenstellung der Transporträder zwischen der Transportstellung und der Arbeitsstellung,
- Fig. 6: eine erste perspektivische Ansicht auf das Detail der Fig. 3;
- Fig. 7: eine zweite perspektivische Ansicht auf das Detail der Fig. 3;
- Fig. 8: eine Seitenansicht einer erfindungsgemäßen Heuwerbungsmaschine in unterschiedlichen Stellungen der Transporträder zur weiteren Verdeutlichung der Erfindung.

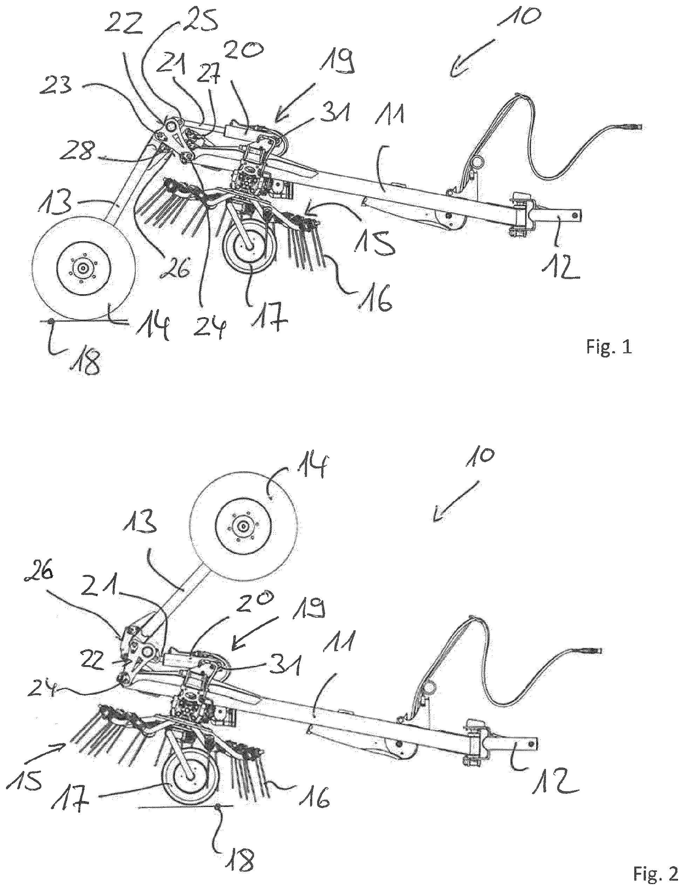

Fig. 1 und 2 zeigen jeweils Seitenansichten einer erfindungsgemäßen, als Wender ausgebildeten Heuwerbungsmaschine 10. Fig. 1 zeigt die Heuwerbungsmaschine 10 mit ihren Transporträdern 14 in einer Transportstellung, Fig. 2 zeigt dieselbe in einer Arbeitsstellung.

Die Heuwerbungsmaschine 10 verfügt über einen Tragrahmen 11. An einem Ende des Tragrahmens 11 ist eine Ankopplungseinrichtung 12 ausgebildet, über welche die Heuwerbungsmaschine 10 an ein landwirtschaftliches Zugfahrzeug angekoppelt werden kann.

An dem Tragrahmen 11 greift über einen jeweiligen Transportradhebel 13 mindestens ein Transportrad 14 an. Ferner greifen an dem Tragrahmen 11 Kreiselkörper 15 mit Zinken 16 an. Mit den Kreiselkörpern 15 wirken Tast- und Stützräder 17 zusammen.

Zwei etwa parallel zueinander angeordnete Transportradhebel 13 und Transporträder 14 sind Baugruppen eines Fahrwerks der Heuwerbungsmaschine 10.

In der in Fig. 1 gezeigten Transportstellung der Transporträder 14 der Heuwerbungsmaschine 10 stützt sich dieselbe mit den Transporträdern 14 auf einem Untergrund 18 ab. Die Tast- und Stützräder 17 sind in der Transportstellung vom Untergrund 18 abgehoben. In der in Fig. 2 gezeigten Arbeitsstellung hingegen stützt sich die Heuwerbungsmaschine 10 mit den Tast- und Stützrädern 17 auf dem Untergrund 18 ab, wobei dann in der Arbeitsstellung die Transporträder 14 vom Untergrund 18 abgehoben sind.

Das Überführen der Transporträder 14 der Heuwerbungsmaschine 10 zwischen der in Fig. 1 gezeigten Transportstellung und der in Fig. 2 gezeigten Arbeitsstellung sowie umgekehrt von der Arbeitsstellung in die Transportstellung erfolgt durch Verschwenken der Transportradhebel 13 sowie der Transporträder 14 relativ zum Tragrahmen 11 mithilfe einer Verstelleinrichtung 19. Die Verstelleinrichtung 19 weist einen doppeltwirkenden Betätigungszylinder 20 mit einer Kolbenstange 21 auf.

In der Transportstellung der Fig. 1 ist die Kolbenstange 21 weiter aus dem Betätigungszylinder 20 ausgefahren, in der Arbeitsstellung der Fig. 2 hingegen ist die Kolbenstange 21 weiter in den Betätigungszylinder 20 eingefahren.

Die Verstelleinrichtung 19 weist zusätzlich zum Betätigungszylinder 20 und der Kolbenstange 21 eine Hubschwinge 22 auf.

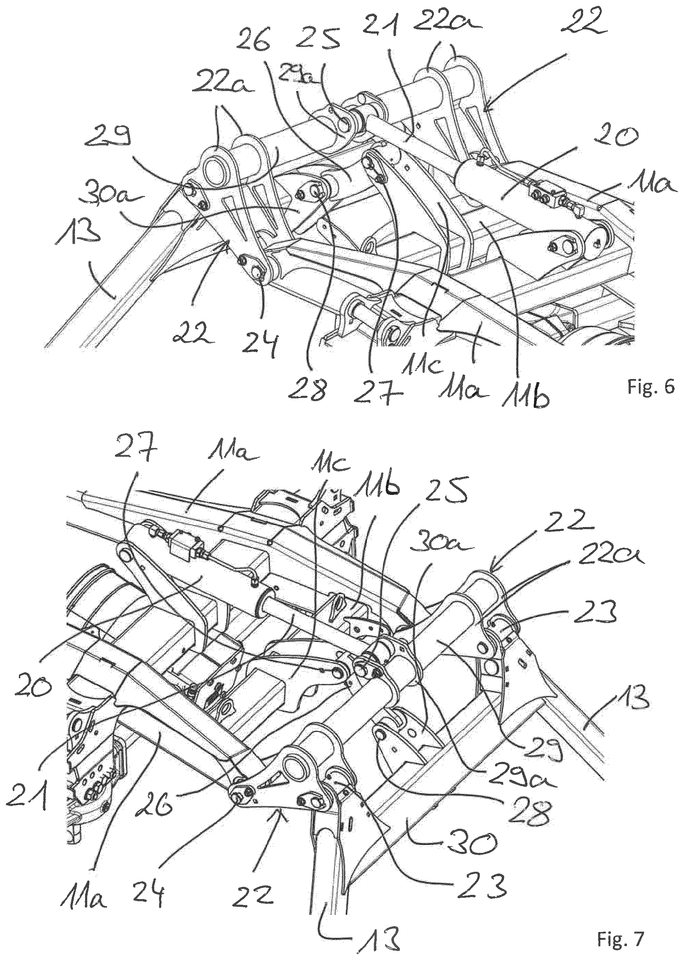

Den perspektivischen Darstellungen der Fig. 6 und 7 kann entnommen werden, dass im Bereich bzw. angrenzend an jeden Transportradhebel 13, nämlich an einem vom Transportrad 14 abgewandten Ende desselben, jeweils Hubschwingbleche 22a vorhanden sind, und die Hubschwinge 22 im Wesentlichen von den Hubschwingblechen 22a sowie einer Querstrebe 29 gebildet wird.

Die Hubschwinge 22 ist um ein erstes Drehgelenk 23 relativ zum jeweiligen Transportradhebel 13 schwenkbar. Ferner ist die Hubschwinge 22 um ein zweites Drehgelenk 24 relativ zum Tragrahmen 11 schwenkbar. Darüber hinaus ist eine relative Verlagerung bzw. Schwenkbewegung der Hubschwinge 22 relativ zur Kolbenstange 21 des Betätigungszylinders 20 um ein drittes Drehgelenk 25 möglich.

Zusätzlich zur Hubschwinge 22 weist die Verstelleinrichtung 19 ferner einen Zwischenkörper 26 auf. Der Zwischenkörper 26 ist um ein viertes Drehgelenk 27 relativ zum Tragrahmen 11 und um ein fünftes Drehgelenk 28 relativ zu den Transportradhebeln 13 schwenkbar.

Das erste Drehgelenk 23 ist zwischen der Hubschwinge 22 und dem jeweiligen vom Transportrad 14 abgewandten Ende des jeweiligen Transportradhebels 13 ausgebildet.

Das zweite Drehgelenk 24 ist zwischen der Hubschwinge 22 und dem Tragrahmen 11, nämlich einem jeweiligen Längsträger 11a des Tragrahmens 11 ausgebildet.

Das dritte Drehgelenk 25 ist zwischen der Hubschwinge 22 und der die Hubschwingbleche 22a starr verbindenden Querstrebe 29 ausgebildet, nämlich an einer mit dieser Querstrebe 29 starr verbundenen Lasche 29a.

Die Hubschwinge 22 weist vorzugsweise eine dreieckartige Kontur auf. Die Drehgelenke 23, 24, 25 sitzen im Bereich der Ecken dieser dreieckartigen Kontur.

Das vierte Drehgelenk 27 ist zwischen dem Zwischenkörper 26 und dem Tragrahmen 11, nämlich einem Querträger 11b des Tragrahmens 11 ausgebildet, und zwar an einer mit dem Querträger 11b fest verbundenen Lasche 11c.

Das fünfte Drehgelenk 28 ist zwischen dem Zwischenkörper 26 und einer sich zwischen den Transportradhebeln 13 erstreckenden Fahrwerksquerstrebe 30 ausgebildet, nämlich an einer mit der Fahrwerksquerstrebe 30 fest verbundenen Lasche 30a.

Der Zwischenkörper 26, das dritte Drehgelenk 25, das vierte Drehgelenk 27 und das fünfte Drehgelenk 28 sind in Querrichtung gesehen zwischen den Transportradhebeln 13, den Hubschwingblechen 22a und den ersten und zweiten Drehgelenken 23, 24 angeordnet. Vorzugsweise ist die Betätigungseinrichtung mit dem Betätigungszylinder 20 und der Kolbenstange 21 sowie der Zwischenkörper 26 in der Mitte zwischen den Hubschwingblechen 22a und den Transportradhebeln 13 angeordnet.

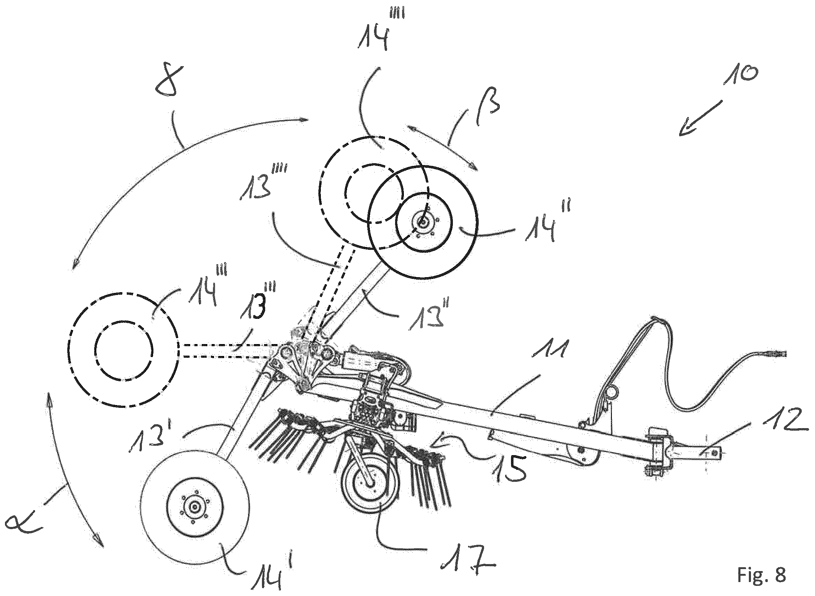

Die obige Ausführung der Heuwerbungsmaschine 10 erlaubt bei kompakter Bauform eine zuverlässige Überführung der Heuwerbungsmaschine 10 zwischen der Transportstellung und der Arbeitsstellung. Ein weiterer Vorteil der Erfindung besteht darin, dass entlang des Klappwegs der Transportradhebel 13 und damit Transporträder 14 unterschiedliche Klappgeschwindigkeiten und damit Verlagerungsgeschwindigkeiten realisiert werden können. Hierauf wird nachfolgend unter Bezugnahme auf Fig. 8 eingegangen.

Fig. 8 zeigt die Heuwerbungsmaschine 10 mit den Transporträdern 14 und Transportradhebeln 13 in unterschiedlichen Stellungen, nämlich in der Transportstellung mit dem Bezugszeichen 13', 14', in der Arbeitsstellung mit den Bezugszeichen 13" und 14" sowie in Zwischenstellungen mit den Bezugszeichen 13"', 14‴ und 13"", 14"". Zwischen der durch die Bezugszeichen 14' und 13' gezeigten Transportstellung und der durch die Bezugszeichen 13‴ und 14‴ gezeigten ersten Zwischenstellung in einem Klappbereich α wird eine relativ kleine Klappgeschwindigkeit gewährleistet, ebenso im Klappbereich β zwischen der durch die Bezugszeichen 13", 14" gezeigten Arbeitsstellung und der durch die Bezugszeichen 13ʺʺ und 14ʺʺ gezeigten zweiten Zwischenstellung. In dem Klappbereich γ zwischen den in der Fig. 8 gezeigten beiden Zwischenstellungen wird eine relativ große Klappgeschwindigkeit für die Transportradhebel 13 sowie Transporträder 14 gewährleistet, und zwar in beiden Verlagerungsrichtungen. Hierdurch kann gewährleistet werden, dass sowohl bei der Verlagerung ausgehend von der Transportstellung in die Arbeitsstellung sowie umgekehrt von der Arbeitsstellung in die Transportstellung im Bereich der Arbeitsstellung sowie Transportstellung jeweils eine relativ geringe Klappgeschwindigkeit und dazwischen eine relativ große Klappgeschwindigkeit bereitgestellt wird. Hiermit können die jeweiligen Endpositionen sanft angefahren werden, also mit geringen Klappgeschwindigkeiten, wobei zwischen denselben zur Verkürzung der Überführungszeit der Transporträder 14 der Heuwerbungsmaschine 10 zwischen der Transportstellung und der Arbeitsstellung eine relativ große Klappgeschwindigkeit bereitgestellt werden kann. Auch dies ergibt sich aus dem oben beschriebenen Zusammenspiel der Hubschwinge 22 und des Zwischenkörpers 26 sowie der Anordnung der Drehgelenke 23, 24, 25, 27 und 28.

Die unterschiedlichen Klappgeschwindigkeiten können insbesondere dadurch gewährleistet werden, dass sich bei der Überführung der Heuwerbungsmaschine 10 zwischen der Transportstellung und der Arbeitsstellung eine Relativposition zwischen dem ersten Drehgelenk 23 und einer sich durch das vierte Drehgelenk 27 und das fünfte Drehgelenk 28 erstreckenden Geraden G ändert. So ändert sich insbesondere der Abstand zwischen dem jeweiligen ersten Drehgelenk 23 und dieser Geraden G beim Klappen der Transportradhebel 13 und damit Transporträder 14 relativ zum Tragrahmen 11.

Der Betätigungszylinder 20 ist bei der Überführung der Heuwerbungsmaschine 10 zwischen der Transportstellung und der Arbeitsstellung um ein sechstes Drehgelenk 31 relativ zum Tragrahmen 11 schwenkbar.

Bei der Überführung der Transporträder 14 der Heuwerbungsmaschine 10 von der in Fig. 1 gezeigten Transportstellung in die in Fig. 2 gezeigte Arbeitsstellung wird demnach die Kolbenstange 21, die anfänglich ausgefahren ist, weiter in den Betätigungszylinder 20 eingefahren. Hierbei senkt sich zunächst der Transportrahmen 11 ab und zwar so weit, bis die Tast- und Stützräder 17 den Untergrund 18 berühren. Nachfolgend heben sich die Transportradhebel 13 mit den Transporträdern 14 infolge der weiteren Schwenkbewegung vom Untergrund 18 ab. Die Hubschwinge 22 führt eine Winkelbewegung um den Tragrahmen 11 aus. Der Zwischenkörper 26 drückt die Transportradhebel 13 weiter nach oben. Bei relativ kleinem Zylinderhub kann ein relativ großer Klappwinkel gewährleistet werden. Während der Klappbewegung verändert sich der Wirkhebel zu den Transportradhebeln 13, sodass sich die Klappgeschwindigkeit entlang des Verlagerungswegs und damit Klappwegs ändert. Beim Start der Klappbewegung ausgehend von der Transportstellung der Fig. 1 erfolgt zunächst ein Klappen mit einer relativ geringen Klappgeschwindigkeit, und zwar vorzugsweise mindestens so lange, bis die Tast- und Stützräder 17 den Untergrund 18 berühren. Nachfolgend erhöht sich die Klappgeschwindigkeit der Transportradhebel 13 und Transporträder 14, bis sich dieselbe kurz vor Erreichen der Endposition für die Arbeitsstellung wieder verringert. Hierdurch kann die Endposition für die Arbeitsstellung sanft angefahren werden.

Bei der umgekehrten Überführung der Heuwerbungsmaschine 10 von der Arbeitsstellung der Fig. 2 in die Transportstellung der Fig. 1 wird die Kolbenstange 21 aus dem Betätigungszylinder 20 weiter ausgefahren, die Transportradhebel 13 mit den Transporträdern 14 werden in die umgekehrte Richtung verlagert, und zwar in Richtung auf den Untergrund 18 bewegt, und zwar wiederum mit den unterschiedlichen Klappgeschwindigkeiten.

### Bezugszeichenliste

- 10: Heuwerbungsmaschine
- 11: Tragrahmen
- 11a: Längsträger
- 11b: Querträger
- 11c: Lasche
- 12: Ankopplungseinrichtung
- 13: Transportradhebel
- 14: Transportrad
- 15: Kreiselkörper
- 16: Zinken
- 17: Tast- und Stützrad
- 18: Untergrund
- 19: Verstelleinrichtung
- 20: Betätigungszylinder
- 21: Kolbenstange
- 22: Hubschwinge
- 22a: Hubschwingblech
- 23: erstes Drehgelenk
- 24: zweites Drehgelenk
- 25: drittes Drehgelenk
- 26: Zwischenkörper
- 27: viertes Drehgelenk
- 28: fünftes Drehgelenk
- 29: Querstrebe
- 29a: Lasche
- 30: Fahrwerksquerstrebe
- 30a: Lasche
- 31: sechstes Drehgelenk

## Patentansprüche

1. Heuwerbungsmaschine (10),
mit einem Tragrahmen (11),
mit mindestens zwei am Tragrahmen (10) über einen jeweiligen Transportradhebel (13) angreifenden Transporträdern (14), die sich in einer Transportstellung der Heuwerbungsmaschine (10) auf einem Untergrund (18) abstützen und die in einer Arbeitsstellung vom Untergrund (18) abgehoben sind,
mit am Tragrahmen (10) aufgenommenen Kreiselkörpern (15),
mit Tast- und Stützrädern (17), die sich in der Arbeitsstellung der Heuwerbungsmaschine (10) auf dem Untergrund (18) abstützen und die in der Transportstellung von dem Untergrund (18) abgehoben sind,
mit einer einen Betätigungszylinder (20) und eine Kolbenstange (21) aufweisenden Verstelleinrichtung (19) zum Verschwenken der am Tragrahmen (11) über den jeweiligen Transportradhebel (13) angreifenden Transporträder (14) bei der Überführung der Heuwerbungsmaschine (10) zwischen der Transportstellung und der Arbeitsstellung, wobei
die Verstelleinrichtung (19) eine Hubschwinge (22) aufweist, die um ein erstes Drehgelenk (23) relativ zu den Transportradhebeln (13), um ein zweites Drehgelenk (24) relativ zum Tragrahmen (11) und um ein drittes Drehgelenk (25) relativ zur Kolbenstange (21) schwenkbar ist,
wobei das zweite Drehgelenk (24) zwischen der Hubschwinge (22) und dem Tragrahmen (11) ausgebildet ist,
die Verstelleinrichtung (19) mindestens einen Zwischenkörper (26) aufweist, der um ein viertes Drehgelenk (27) relativ zum Tragrahmen (11) und um ein fünftes Drehgelenk (28) relativ zu den Transportradhebeln (13) schwenkbar ist,
**dadurch gekennzeichnet, dass**
das erste Drehgelenk (23) zwischen der Hubschwinge (22) und einem vom jeweiligen Transportrad (14) abgewandten Ende des jeweiligen Transportradhebels (13), und das dritte Drehgelenk (25) zwischen einer Querstrebe (29) der Hubschwinge (22) und der Kolbenstange (21) ausgebildet ist,
das vierte Drehgelenk (27) zwischen dem Zwischenkörper (26) und dem Tragrahmen (11) und das fünfte Drehgelenk (28) zwischen dem Zwischenkörper (26) und einer sich zwischen den Transportradhebeln (13) erstreckenden Fahrwerksquerstrebe (30) ausgebildet ist.

2. Heuwerbungsmaschine nach Anspruch 1, **dadurch gekennzeichnet, dass** das zweite Drehgelenk (24) zwischen der Hubschwinge (22) und einem Längsträger (11a) des Tragrahmens (11) und das dritte Drehgelenk (25) zwischen der Kolbenstange (21) und der die Hubschwingbleche (22a) verbindenden Querstrebe (29) starr angreifenden Lasche (29a) der Querstrebe (29) ausgebildet ist.

3. Heuwerbungsmaschine nach Anspruch 1 oder 2, **dadurch gekennzeichnet, dass** das vierte Drehgelenk (27) zwischen dem Zwischenkörper (26) und einem Querträger (11b) des Tragrahmens (11) und das fünfte Drehgelenk (28) zwischen dem Zwischenkörper (26) und einer an der die Transportradhebel (13) verbindenden Fahrwerksquerstrebe (30) starr angreifenden Lasche (30a) der Fahrwerksquerstrebe (30) ausgebildet ist.

4. Heuwerbungsmaschine nach einem der Ansprüche 1 bis 3, **dadurch gekennzeichnet, dass** sich bei der Überführung der Heuwerbungsmaschine (10) zwischen der Transportstellung und der Arbeitsstellung eine Relativposition zwischen dem ersten Drehgelenk (23) und einer sich durch das vierte und fünfte Drehgelenk (27, 28) erstreckenden Geraden (G) ändert.

5. Heuwerbungsmaschine nach einem der Ansprüche 1 bis 4, **dadurch gekennzeichnet, dass** der Betätigungszylinder (20) um ein sechstes Drehgelenk (31) relativ zum Tragrahmen (11) schwenkbar ist.

6. Heuwerbungsmaschine nach einem der Ansprüche 1 bis 5, **dadurch gekennzeichnet, dass** dieselbe als Wender ausgebildet ist.

## Claims

1. Haymaking machine (10),
having a load-bearing frame (11),
having at least two transport wheels (14) which act on the load-bearing frame (10) via a respective transport wheel lever (13) and which, in a transport position of the haymaking machine (10), are supported on an underlying surface (18) and which, in a working position, are lifted off from the underlying surface (18),
having rotor bodies (15) accommodated on the load-bearing frame (10),
having feeler and support wheels (17) which, in the working position of the haymaking machine (10), are supported on the underlying surface (18) and which, in the transport position, are lifted off from the underlying surface (18),
having an adjusting device (19), having an actuating cylinder (20) and a piston rod (21), for pivoting the transport wheels (14), which act on the load-bearing frame (11) via the respective transport wheel lever (13), during the transfer of the haymaking machine (10) between the transport position and the working position, wherein the adjusting device (19) has a lifting rocker (22) which is pivotable about a first rotary joint (23) relative to the transport wheel levers (13), about a second rotary joint (24) relative to the load-bearing frame (11) and about a third rotary joint (25) relative to the piston rod (21),
wherein the second rotary joint (24) is formed between the lifting rocker (22) and the load-bearing frame (11), the adjusting device (19) has at least one intermediate body (26) which is pivotable about a fourth rotary joint (27) relative to the load-bearing frame (11) and about a fifth rotary joint (28) relative to the transport wheel levers (13),
**characterized in that**
the first rotary joint (23) is formed between the lifting rocker (22) and an end of the respective transport wheel lever (13) facing away from the respective transport wheel (14), and the third rotary joint (25) is formed between a transverse strut (29) of the lifting rocker (22) and the piston rod (21),
the fourth rotary joint (27) is formed between the intermediate body (26) and the load-bearing frame (11), and the fifth rotary joint (28) is formed between the intermediate body (26) and a chassis transverse strut (30) extending between the transport wheel levers (13).

2. Haymaking machine according to Claim 1, **characterized in that** the second rotary joint (24) is formed between the lifting rocker (22) and a longitudinal member (11a) of the load-bearing frame (11), and the third rotary joint (25) is formed between the piston rod (21) and the bracket (29a) of the transverse strut (29), the bracket acting rigidly on the transverse strut (29) connecting the lifting rocker plates (22a).

3. Haymaking machine according to Claim 1 or 2, **characterized in that** the fourth rotary joint (27) is formed between the intermediate body (26) and a cross member (11b) of the load-bearing frame (11), and the fifth rotary joint (28) is formed between the intermediate body (26) and a bracket (30a) of the chassis transverse strut (30), the bracket acting rigidly on the chassis transverse strut (30) connecting the transport wheel levers (13).

4. Haymaking machine according to one of Claims 1 to 3, **characterized in that**, during the transfer of the haymaking machine (10) between the transport position and the working position, a relative position between the first rotary joint (23) and a straight line (G) extending through the fourth and fifth rotary joints (27, 28) changes.

5. Haymaking machine according to one of Claims 1 to 4, **characterized in that** the actuating cylinder (20) is pivotable relative to the load-bearing frame (11) about a sixth rotary joint (31).

6. Haymaking machine according to one of Claims 1 to 5, **characterized in that** said haymaking machine is designed as a tedder.

## Revendications

1. Machine de fenaison (10),
comprenant un châssis porteur (11),
comprenant au moins deux roues de transport (14) reliées au châssis porteur (10) par l'intermédiaire d'un levier de roue de transport (13) respectif, qui prennent appui sur un sol (18) dans une position de transport de la machine de fenaison (10) et qui sont soulevées du sol (18) dans une position de travail,
comprenant des corps de rotor (15) montés sur le châssis porteur (10),
comprenant des roues de jauge et d'appui (17), qui prennent appui sur le sol (18) dans la position de travail de la machine de fenaison (10) et qui sont soulevées du sol (18) dans la position de transport,
comprenant un dispositif de réglage (19) présentant un vérin d'actionnement (20) et une tige de piston (21), destiné à faire pivoter les roues de transport (14) reliées au châssis porteur (11) par l'intermédiaire du levier de roue de transport (13) respectif lors du passage de la machine de fenaison (10) entre la position de transport et la position de travail, dans laquelle
le dispositif de réglage (19) présente un bras oscillant de levage (22), qui peut pivoter autour d'une première articulation pivotante (23) par rapport aux leviers de roue de transport (13), autour d'une deuxième articulation pivotante (24) par rapport au châssis porteur (11) et autour d'une troisième articulation pivotante (25) par rapport à la tige de piston (21),
la deuxième articulation pivotante (24) étant formée entre le bras oscillant de levage (22) et le châssis porteur (11),
le dispositif de réglage (19) présente au moins un corps intermédiaire (26), qui peut pivoter autour d'une quatrième articulation pivotante (27) par rapport au châssis porteur (11) et autour d'une cinquième articulation pivotante (28) par rapport aux leviers de roue de transport (13),
**caractérisée en ce que**
la première articulation pivotante (23) est formée entre le bras oscillant de levage (22) et une extrémité du levier de roue de transport (13) respectif opposée à la roue de transport (14) respective, et la troisième articulation pivotante (25) est formée entre une traverse (29) du bras oscillant de levage (22) et la tige de piston (21),
la quatrième articulation pivotante (27) est formée entre le corps intermédiaire (26) et le châssis porteur (11), et la cinquième articulation pivotante (28) est formée entre le corps intermédiaire (26) et une traverse de train de roulement (30) s'étendant entre les leviers de roue de transport (13).

2. Machine de fenaison selon la revendication 1, **caractérisée en ce que** la deuxième articulation pivotante (24) est formée entre le bras oscillant de levage (22) et un longeron (11a) du châssis porteur (11), et la troisième articulation pivotante (25) est formée entre la tige de piston (21) et une patte (29a) de la traverse (29), fixée rigidement à la traverse (29) reliant les tôles (22a) du bras oscillant de levage.

3. Machine de fenaison selon la revendication 1 ou 2, **caractérisée en ce que** la quatrième articulation pivotante (27) est formée entre le corps intermédiaire (26) et une traverse (11b) du châssis porteur (11), et la cinquième articulation pivotante (28) est formée entre le corps intermédiaire (26) et une patte (30a) de la traverse de train de roulement (30), fixée rigidement à la traverse de train de roulement (30) reliant les leviers de roue de transport (13).

4. Machine de fenaison selon l'une des revendications 1 à 3, **caractérisée en ce que**, lors du passage de la machine de fenaison (10) entre la position de transport et la position de travail, une position relative entre la première articulation pivotante (23) et une droite (G) passant par les quatrième et cinquième articulations pivotantes (27, 28) change.

5. Machine de fenaison selon l'une des revendications 1 à 4, **caractérisée en ce que** le vérin d'actionnement (20) peut pivoter autour d'une sixième articulation pivotante (31) par rapport au châssis porteur (11).

6. Machine de fenaison selon l'une des revendications 1 à 5, **caractérisée en ce qu'**elle est conçue sous la forme d'une faneuse.
